# EUROPEAN PATENT APPLICATION

(11) **EP 2 223 798 A1**
(43) Date of publication of application: **01.09.2010**
(21) Application number: 09382236.9
(22) Date of filing: 02.11.2009
(51) Int. Cl.: B32B 7/14, B32B 15/08, B32B 27/32, B65D 17/00

(54) **Guarantee seal with pull-tab for containers and its manufacture method**

(30) Priority: 27.02.2009 MX 2009002244
(71) Applicant: Laminados Facarlyte, S.A. de C.V., 54030 Tlalnepantla- Mexico (MX)
(72) Inventor: Gonzalez Carro, José Manuel, 54030, TLALNEPANTLA-MEXICO (MX); Gonzalez Carro, Paulo, 54030, TLALNEPANTLA-MEXICO (MX); Gonzalez Dodd, Andrew, 54030, TLALNEPANTLA-MEXICO (MX)
(74) Representative: Urizar Anasagasti, Jesus Maria

(57) **Abstract**

A guarantee seal with pull tab for containers and its manufacture method which comprises a polymeric film in its top, and a bottom consists of a lamination which includes an EPE layer or a layer of PE film, a second layer of aluminium foil which is strongly adheres to the first layer, a third thermosealant layer which covers the aluminium layer in its outer.

The top of the guarantee seal is joined to the bottom by an adhesive applied in strips, in such way that a part stays strongly laminated in the area where was applied the adhesive and the other one stays unstuck in the area which does not contain adhesive.

The resulting structure is died cut in form of disc in such way that includes a laminated portion and one unlaminated portion, this last forming a pull tab in form of crescent which is used to easily pull and remove the seal of the mouth of the container.

## Description

The present invention relates to a guarantee seal with pull tab and its manufacture method, for being used in containers like vials, bottles and other similar containers, which can be food, pharmaceutical, among others.

The use of the pull tab as integral part of the guarantee seal allows to the final consumer to have the ease of removing in a friendly way such seal of the container, since, a weakness of the internal seals or security is the difficult to be removed, due to the contact face of the seal with the mouth of the container generally consists of an aluminium foil which is coated with heat-sensitive adhesive or a plastic layer meltable with the heat which adheres it to the neck of the container and without the presence of a pull tab is largely complicated remove such seal.

The present invention contains elements, that although they exist in the art, corrects certain actual deficiencies in the manufacture methods, fabrication and adhesion of the guarantee seals with pull tabs in containers, providing a free-saving material, time and money in its manufacture.

### BACKGROUNDS OF THE INVENTION

In the art there are a lot of guarantee seals for the product protection contained within containers, most of whom use sealed common techniques of several layers of materials, either polymers as the PET, PE, PP, EVA, PVC and others, joined to other kind of substrates as the aluminium, paper or cardboard , etc.

Within the broad range of guarantee seals in the art we found two kinds of seals with pull tab. Firstly, we found seals where the pull tab is a radial extension of the seal which is formed when is swaged the sealed material with a specialized die cutting which include the mentioned pull tab. This kind of seals can contain more than one pull tab and the dimensions and shape of the pull tabs depend of the design of the die cutting. The second type of the seals with pull tab contains the pull tab incorporated at the top of the seal and it does not require a specialized die cutting for its processing.

The manufacture process of the seal with pull tab in form of radial extension presents the complication of require an special die cutting which include such pull tab. It also presents the complicated folding of the pull tab which tends to straighten due to the memory of the structure of the seal. This complication may require additional equipment to avoid or minimize the unfolding of the pull tab. Moreover this kind of seal presents problems of heat distribution induced to interfere the pull tab with the normal flow of heat and also is a risk of that the thermosealant of the pull tab is activated by the heat of the induction and adheres to the inside of the cap.

The manufacture processes of the seals with pull tabs incorporated in their majority are too complicated or involve a lot of resources which results in generation of costs that can be simplified into a series of practical steps as is provided in the present invention.

In the state of the technique we found the US patent No. 5, 975, 304 from UNIPAC CORPORATION, which develop a seal that comprises a membrane which contains in its outer face a thermosealant, a non-laminable layer and a top layer capable of adhere to the mentioned membrane and the non laminable layer. This structure is died cut on such way that the resulting disc or seal contains a portion of no-laminable layer and one portion which lacks of such non laminable layer.

One disadvantage of this kind of structure is the thickness difference in the seal profile, since, the portion which contains the non laminable layer is thicker than the portion which lacks of this layer, and such difference may cause a deficient contact between the seal and the mouth of the container, causing a faulty sealing particularly in the immediately area of the interface.

Other disadvantage of the structure developed in the US patent 5, 975, 304 is the difference in the profile of heat absorption in the sealed process between the part which contains the non laminable layer and the portion which lacks of such layer; since, the portion which contains the non laminable layer to hold more mass, it will absorb more heat than the portion which lacks of this layer in the sealed process resulting in that the heat available for execute the sealed is not uniform between the two portions of the seal; thus contributing a faulty sealing.

The present invention overcomes and corrects such deficiencies, because the structure or seal used does not contain a non laminable layer, allowing that the profile of the seal thickness being perfectly uniform, thus, ensuring an excellent contact between the seal and the mouth of the bottle. At the same time, the absence of the non laminable layer ensures a better distribution of the heat of sealing.

Likewise, the process of manufacture of the present invention removes the need of use the no-laminable layer, resulting in a saving of energy and resources.

The US patent 4, 960, 216 from SELIG SEALING PRODUCTS, INC., mentions a seal composed for a lamination which includes an aluminium layer and a thermosealant layer and a second lamination which includes a film or plastic foam and one PET layer (Polyethylene terephthalate). These two laminations are joined by a layer of adhesive and one section with a doted design of adhesive. The structure is died cut in such way that the resulting disc covers a solid portion and a doted portion of the adhesive.

One deficiency of such patent consists in that the doted portion of the seal which must form the pull tab is not positively separate, besides that such portion may be difficult to identify and separate by the consumer.

The present invention corrects and overcomes such deficiencies, because the portion which constitutes the pull tab absolutely does not contain adhesive, achieving a pull tab positively separated, easy to identify and use by the consumer.

Likewise, the guarantee seal part of the present invention is an improvement respect to the seals of one piece which may die cut with one or more pull tabs, since it eliminates the need of the died cut with pull tab (special die cutting, folded problem of the pull tab by the memory of the seal, potential adhesion of the pull-tab to the inside of the cap) and the problems of the heat distribution that the pull tabs cause to seal.

In conclusion, the above mentioned documents have been overcome in novelty, inventive activity and industrial application by the present invention, question that later is showed in the description of the embodiments.

### BRIEF DESCRIPTION OF THE DRAWINGS.

The enclosed drawings are included to provide a better comprehension of the invention and are incorporated and constitute part of this specification. The drawings illustrate the embodiments of the invention and along with the description serve for explain the principles of the invention.
Fig. 1 Illustrates a first step of the impression or lamination method of a polymeric film to which is applied an adhesive in strips with the help of rollers.
Fig. 2 Illustrates a second step of the first lamination method consistent in the application or splice of the resulting layer of Fig. 1 to the consistent layer in the body of the guarantee seal which are joined in the lamination NIP.
Fig. 3 illustrates a second lamination method by extrusion.
Fig. 4a illustrates a first step of the cutting in strips for an easy died cut of the body structure of the guarantee seal with the adhesive in strips.
Fig. 4b illustrates a cut reel or band as result of the first step of the cut for an easy died cut.
Fig. 5a Illustrates a second step of the cut, the easy died cut of the body structure of the guarantee seal with the adhesive in strips.
Fig. 5b illustrates a disc result of the cut or easy died cut.
Fig. 6a illustrates a first step of the cut for the double died cut of the body structure of the guarantee seal with the adhesive in strips.
Fig. 6b illustrates a reel or band cut according to the cut procedure for the double died cut.
Fig. 7a illustrates a second step of the cut, the double died cut of the body structure of the guarantee seal with the adhesive in strips.
Fig. 7b illustrates the two discs, result of the cut or the double died cut.
Fig. 8 illustrates a guarantee seal with pull tab according with an embodiment of the present invention.

### DESCRIPTION OF THE EMBODIMENTS

Reference will be made in detail to the embodiments of the present invention; the examples are illustrated with the drawings that accompany it. Wherever possible, are used the same reference numbers in the drawings and the description for referring to the same parts.

The next description is presented to enable someone with skill in the art to make and use the present invention, and is provided in the context of a patent application and its requirements. Several modifications to the described embodiments will be apparent to those with skill in the art and generic principles taught in the same may be applied to other embodiments. In this way, the present invention is not intended to limit to the shown embodiment but remember the wider range consistent with the principles and features described herein including alternatives, modifications and equivalents, as defined within the range of the attached claims. It is obvious that the drawings are not in scale and are of schematic nature such that is thinking better illustrate the interest features. Moreover, the reference numbers are applied to the components, through the present revelation. The descriptive terminology has been adopted with the purpose of improve the comprehension of the lector, respect to the several views provided in the figures, and it does not pretend being limiting.

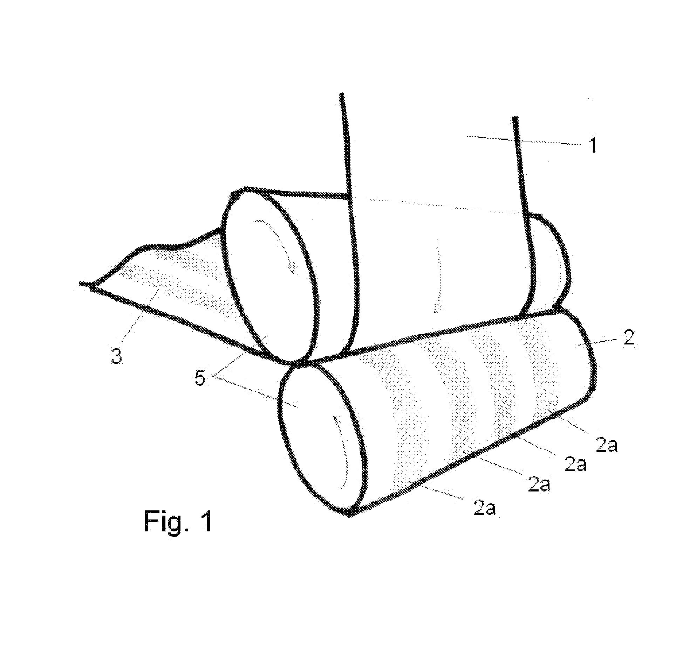

FIG. 1 illustrates a first step of the lamination step by impression of the strips of adhesive to a polymeric film with the help of rollers, which at least contains:
- One Polymeric film (1);
- The polymeric film (1) to which with the help of a rotogravurer roller (5) is applied an adhesive in strips (2);
- One layer result of the application of the adhesive in strips (3).

Usually a rotogravurer roller for the lamination is uniform from end to end consistently applying uniformly an amount of adhesive to a substrate from side to side, however, in the present invention; the used roller applied the adhesive in sprits, containing application areas and non-application areas which is achieved with differences in the profile of the rotogravurer roller.

The application areas of the rotogravurer roller contain the holes commonly used in such rotogravurer rollers. The non-application areas are smooth and free of holes. In the station of application of the adhesive of the laminating machine, the bottom of the roller is immersed in the tray which contains the adhesive (spread). The excess of adhesive is removed by a roller blade.

The holes of the application areas are filled with the adhesive and the non-application areas are totally clean of the adhesive. To contact the roller the polymeric film, the adhesive of the holes is transferred to the polymeric film in form of longitudinal sprits (3).

It is important to mention that the adhesive, before to be applied to the substrate in the present invention, could be pigmented with a colorant so that the lamination layers are distinguished with the non-laminated.

Depending of the resistance of the polymeric film, this may be reinforced with many substrates; either with a PE polyethylene layer, BOPP oriented polypropylene, nylon, etc.

It is important to mention that for the experts in the art that the present application embodiment of the adhesive in strips is made with the system of rotogravure through the rollers; however, this may be done with other impression means as the flexography.

The polymeric film with the adhesive in strips (3), which will be pigmented if the adhesive was previously pigmented; it is considered as the top of the guarantee seal (11), therefore, parallel to the application step of the adhesive in strips, it is necessary embody the bottom of the guarantee seal (11) typically consisting in a film (4) that through one or more laminations includes an expanded polyethylene layer (EPE) or in its place, a polyethylene film (PE) as well as an aluminium foil layer and one thermosealant layer.
The order of the layers to obtain the film (4) is the following:
1. EPE or PE layer.
2. Aluminium foil
3. Thermosealant

If is used the EPE expended polyethylene it may be joined to the aluminium by lamination for adhesive or laminated by extrusion. The thermosealant layer may be extruded over the aluminium or if it is a PET film, it must be recovered with a thermosealant layer; such film will be laminated by adhesive or by extrusion to the aluminium layer.

EPE shall be used when needed more body to the seal of guarantee needing a greater padded of the seal of guarantee to ensure a good contact between such seal of guarantee and the mouth of the container.

PE shall be used when the padding is not a need or to give less thickness to the guarantee seal, improving the heat distribution during the sealed, thus, obtaining a lower cost structure.

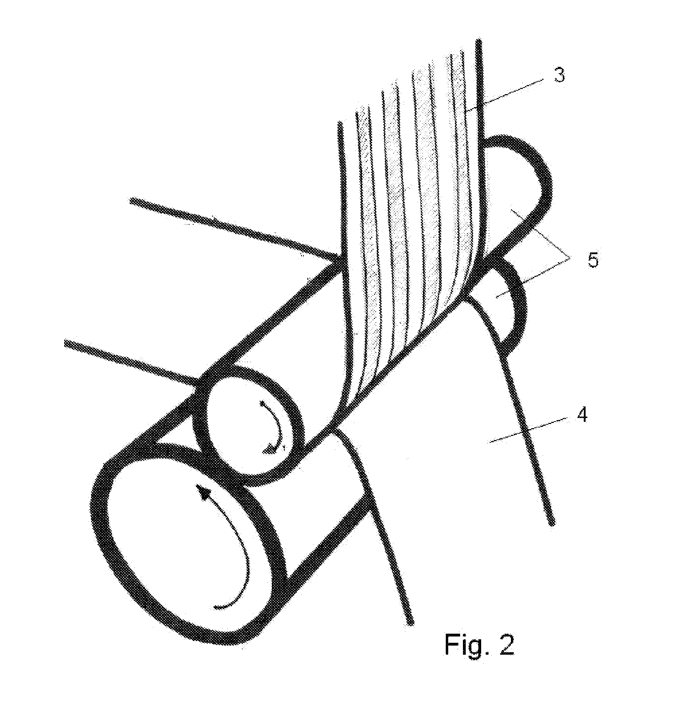

Fig. 2 illustrates a second step of the first lamination method consisting in the splice of the polymeric film with the adhesive in sprits (3) to the film (4) consisting in the body of the guarantee seal (11).

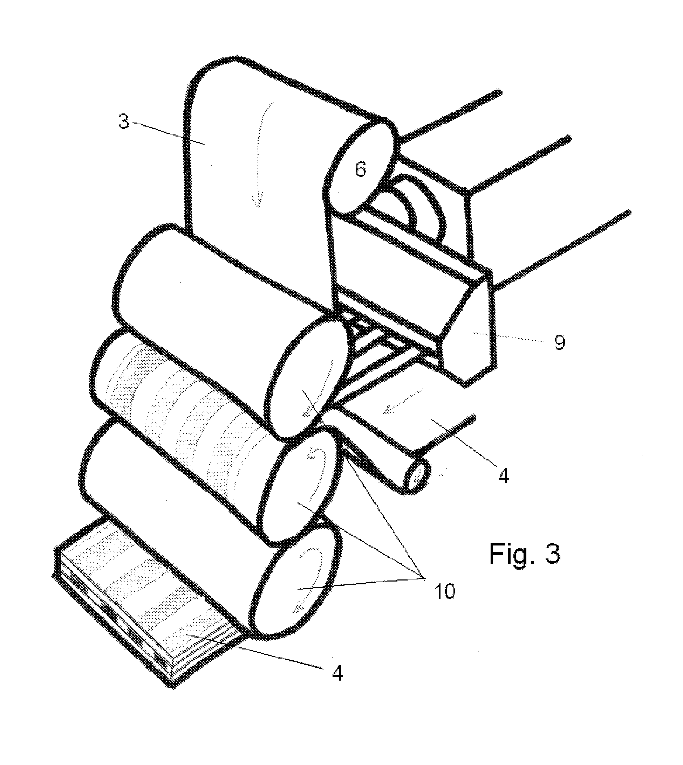

The films (3) and (4) are joined by the adhesive applied previously in longitudinal sprits to the film (3), leaving spaces between the sprits with out adhesive, in such way that the films (3) and (4) stay strongly laminated in the areas with adhesive and stay unlaminated in the areas lacking of adhesive. In other embodiment of the present invention, in Fig. 3 is illustrate a second method equivalent to the impression or lamination step described previously, denominated extrusion step, which, depending of the necessities in the specific case, may be a second option to obtain the splice of the films (3) and (4) with a polymer which serves as an adhesive.
With the use of a extrusion machine such as is illustrated in Fig. 3, a first roller (6) with a polymeric film (1) which subsequently will be the substrate of the pull tab of the guarantee seal, provides the lamination system by extrusion feeding the lamination NIP (10), at the same time, on the back of the extrusion machine is the film (4) which is directed by accompanying rollers toward union point between the upper rollers or lamination NIP (10) where is joined with the film(1), this two films are joined by the extruded material which serves as adhesive and which gets out of the cube of the extrusion machine (9) in this case and in an atypical form the extruded material gets out of the cube in form of sprits which are deposited between the two films, which makes that one part of the splice paste and the other one no, giving as a result the body of the guarantee seal (11).

It is important to mention that the extruded material which serves as adhesive in the present method, could be pigmented with anteriority in order being visible the adhesive sprits from the polymeric film and therefore easily distinguishable.

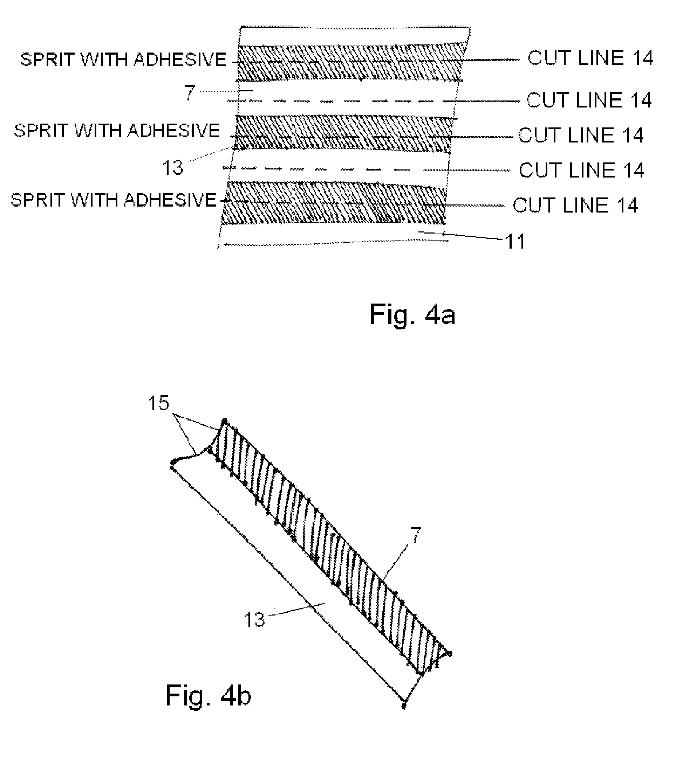

Fig 4a illustrates the film result of the complete splice of the layers and the adhesive which form the body of the guarantee seal (11) either through the lamination process by adhesives (impression) or by the lamination process by extrusion, which at least includes:
- A sprit with adhesive (7);
- A sprit with out adhesive (13).
The resulting film of the complete splice of the layers and the adhesive which form the body of the guarantee seal (11) is cut in longitudinal lines denominated cut lines (14) which covers one half of the strip with adhesive to the half of the next sprit without adhesive, with the purpose of perform an easy died cut.

Fig 4 illustrates a reel or cut band (15) containing of the half toward one end a part with adhesive (7) and the other half toward the other end a part without adhesive (13); i.e., the reel or cut band (15) is died cut in such manner that include a laminated portion and one unlaminated portion, this last portion will constitute a pull tab in form of crescent which will be used to pull and easily remove the guarantee seal from the mouth of the container.

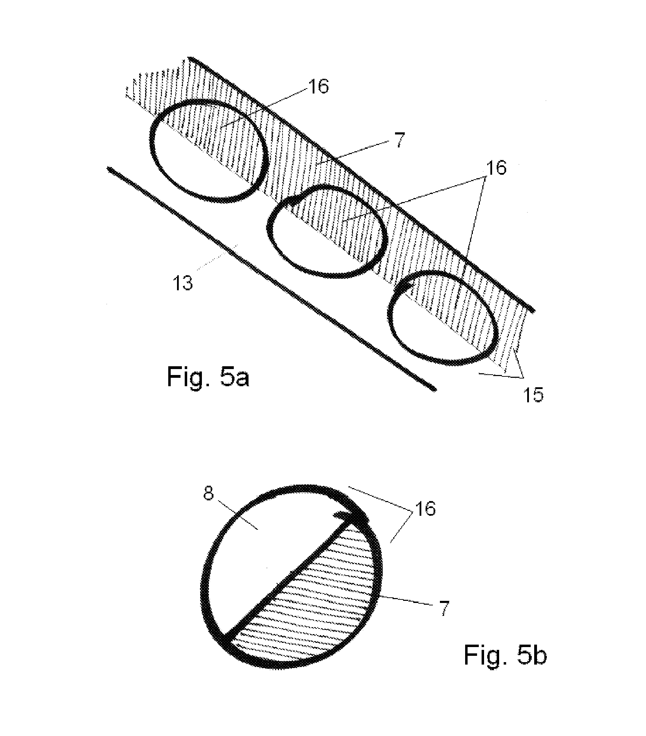

The above is illustrated in Fig. 5a, which shows the reel or cut band (15) with swages or died cut in form of circles (16), which is illustrated in a complete and finished form in Fig. 5b.

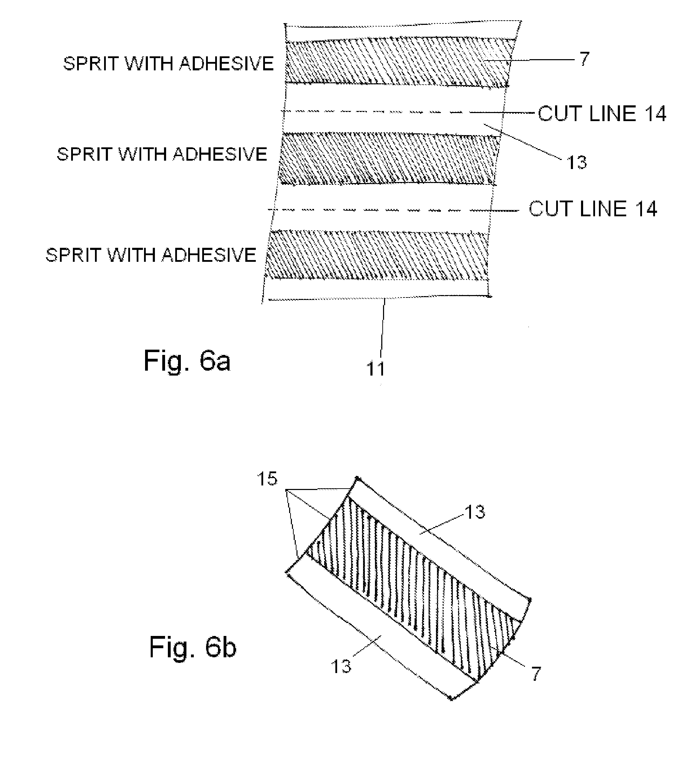

Fig 6a illustrates the film resulting of the complete splice of the layers and the adhesive which form the body of the guarantee seal (11) presenting longitudinal lines denominated cut lines (14) which cover one half of a sprit without adhesive, passing by a complete sprit of adhesive to the other following half of the sprit without adhesive, with the purpose of making a double died cut.

Fig. 6b illustrates a reel or cut band (15) containing in the half a sprit with adhesive (7) and in both ends presents two sprits without adhesive (13); i.e., the reel or cut band (15) is died cut in such manner that includes a laminated portion to the center and two unlaminated portions to the ends.

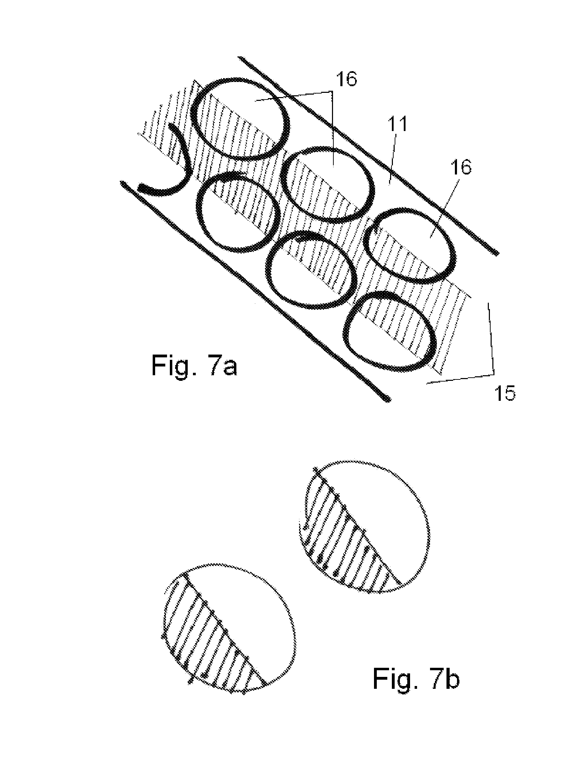

The double died cut pattern is illustrated in Fig. 7a, which shows the reel or cut band (15) with swages or died cut in form of circles (16) in two parallel lines, which will indicate the died cut or swage of the band in a form that in both cut stay discs with a side without adhesive, achieving that the side that has not adhesive gets lift, thus, stays the pull tab from the guarantee seal, better illustrated in Fig. 7b.

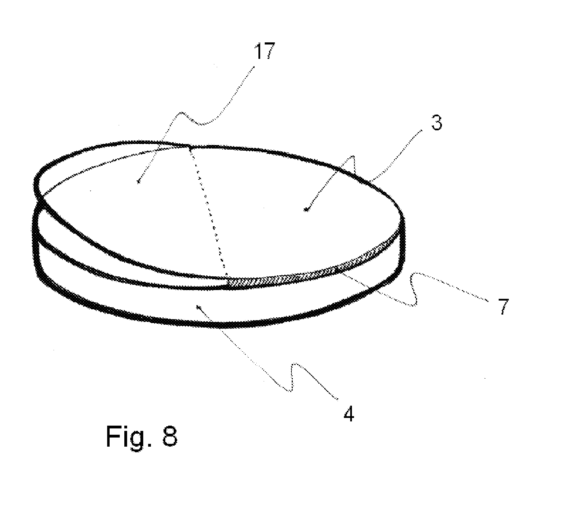

Finally, Fig. 8 illustrates a finished guarantee seal with pull tab (11), which at least includes:
- A substrate of support or body of the guarantee seal (4) at least composed by a EPE or PE layer, an aluminium foil and one thermosealant;
- An adhesive layer (7) applied either by impression or by extrusion in the lateral part of the guarantee seal;
- A polymeric film (3) adhered by impression or extrusion to the layer of adhesive;
- An outgoing part of the same polymeric film with out adheres forming the pull tab (17) of the guarantee seal.

As last step, after obtaining the guarantee seal with pull tab according to the referred methods of the present invention, it could be possible adhering to the mouth of the container activating the thermosealant layer of the bottom from the seal either by direct heat or conduction or indirect heat or induction.

The conduction method is referred to the sealed process where is applied direct heat to the guarantee seal, locating it on the mouth of the container with the thermosealant layer in contact with the mouth of the container. The direct heat applied activates the thermosealant adhesive adhering it thus to the mouth of the container.

The induction method is referred to the sealed process where the heat is induced by a magnetic field. The seal is located in a screw cap with the thermosealant layer towards outside. The cap is screwed in the neck of the container staying the thermosealant layer in contact with the mouth of the container pushed by the cap. The container is exposed to a magnetic field created by a machine known in the art as induction machine or sealer. The magnetic field creates an electric current in the aluminium of the seal, process which causes the heating of this layer, activating by consequence the thermosealant adhesive, gets adhere thus, to the mouth of the container.

Due to the methods of manufacture of the guarantee seal with pull tab according with the embodiments of the present invention, the adhesion methods of the seal to the container either by induction or conduction, they result friendly handling, achieving a sealed with out deficiencies.

Other method for adhere the guarantee seal with pull tab to the container may be done to substitute the thermosealant layer by other substrate included the paper, where the sealed process is in cold, without the necessity of applying heat. In this case the seal would require the application of an adhesive to the mouth of the container. The seal is located in a screw cap with the paper towards outside. To screw the cap in the neck of the container the paper face stay in contact with the adhesive applied to the mouth of the container, adhering and sealing the container.

It is obvious to those experts in the matter that is possible to perform several modifications and changes to the structure of the present invention with out departing from the spirit and range of it. Given the above, it is intended that the present invention covers modifications and variations of the same since they fit within the range of the following claims and their equivalents.

## Claims

**1.** One seal of guarantee with pull tab for containers wherein comprises:
- A top part consisting in a polymeric film;
- A layer of adhesive in the center part;
- A bottom part composed by a film or lamination which includes an EPE layer or a PE film layer, a second layer of aluminium foil which is firmly adhered to the first layer and a third thermosealant layer which covers the aluminium in its outer part.

**2.** A guarantee seal with pull tab for containers according to claim 1, wherein further the polymeric film may be of PET, BOPP, a PE film, nylon, etc. or may be reinforced with one or more of these or other films.

**3.** A seal of guarantee with pull tab for containers according to claim 1, wherein further the layer of adhesive could be pigmented before the lamination in order to make it visible and easy to recognize respect to the other layers.

**1.** A seal of guarantee with pull tab for containers according to claim 1, wherein further the bottom composed by a film or lamination may be included by an EPE layer or by a layer of PE film.

**2.** A seal of guarantee with pull tab for containers according to claim 1, wherein further the thermosealant layer included in the bottom layer may be substituted by other substrate included the paper.

**3.** A seal of guarantee with pull tab for containers according to claim 1, wherein further the thermosealant layer may be activated by direct heat or conduction or by indirect heat of induction.

**4.** A guarantee seal with pull tab for containers wherein the polymeric film which makes up it in its top does not contain adhesive forming an easy-pull tap by the consumer.

**5.** A manufacture method of guarantee seal with pull tab for containers wherein it consists of the following steps:
- Application of adhesive by impression methods to a polymeric film in intermittent strips with the help of rollers.
- Lamination of the polymeric film with adhesive in intermittent strips to a film comprising by an EPE or PE layer, an aluminium foil layer and a thermosealant layer or other substrate as paper, obtaining a laminated film with strips of adhesive and strips without adhesive.
- To die cut the laminated film with strips of adhesive in form of circles so that a side of the circle has the strip with adhesive and the other side of the circle has the strip without adhesive.

**9.** A manufacture method of guarantee seal with pull tab for containers according to claim 5, wherein further the rollers used for achieving the lamination of the polymeric film with adhesive in intermittent films have an irregular relief, being the sunken areas of the roller relief to which is applied the adhesive (spread) which may be pigmented previously with any colorant for an easy visual location, staying the holes of the application areas filled with adhesive and the non-application areas completely free of adhesive, to contacting the roller, the polymeric film or PET the adhesive of the holes is transferred to the polymeric film or PET in form of longitudinal strips.

**10.** A manufacture method of guarantee seal with pull tab for containers according to claim 5, wherein further the lamination process by impression of the polymeric film to the adhesive and to the inferior film may be replaced by extrusion lamination consisting in a first roll of polymeric film which then will be the substrate of the pull tab of the guarantee seal, it enters by above to the lamination NIP, at the same time, of the rear of the extrusion machine comes the lamina of several layers which is denominated body of the guarantee seal and enters to the lamination NIP by the bottom, these two layers are joined in intermittent form in longitudinal bands by extruded polymer bands, which may be colored or not, which gets out of the cube of the extruder machine, this mode frankly is atypical in the lamination processes. The resulting structure is cooled on the calender rollers to be rolled later.

**11.** A manufacture method of guarantee seal with pull tab for containers according to claim 5, wherein further the died cut or swage of the bad or bobbin may be easy when is cutting the material in bands wherein one side has adhesive and the other not, for later, die cut the band in circles so that one end of this has a strip with adhesive and the other end does not contain the adhesive.

**12.** A manufacture method of guarantee seal with pull tab for containers according to claim 5, wherein further the died cut or swage of the band or reel may be double when the material is cutting in bands in such way that consists of one strip of adhesive in the center and two strips without adhesive to the ends of the band, for later die cut the band in circles marked in parallel lines so that one end of each circle has a strip with adhesive and the other end does not contain adhesive.
